# DEMANDE DE BREVET EUROPEEN

(11) **EP 2 264 410 A1**
(43) Date de publication de la demande: **22.12.2010**
(21) Numéro de dépôt: 09305490.6
(22) Date de dépôt: 28.05.2009
(51) Int. Cl.: G01G 5/02, F16L 11/133, E02F 3/26, E02F 3/90, E02F 7/02

(54) **Jauge de charge pour drague**

(71) Demandeur: Seguin, Patrick, 33330 Saint Laurent des Combes (FR)
(72) Inventeur: Seguin, Patrick, 33330 Saint Laurent des Combes (FR)
(74) Mandataire: Fantin, Laurent

(57) **Abrégé**

L'objet de l'invention est une jauge (20) de contrôle de la charge d'un tuyau (16) flottant, notamment relié à une drague, ladite jauge (20) étant rapportée directement ou indirectement sur ledit tuyau (16) et comprenant une enceinte (22) avec une paroi inférieure ajourée (23), et, à l'intérieur de l'enceinte (22), un flotteur (44) se maintenant à la surface de l'eau (10) et fixé à l'extrémité inférieure (46) d'une tige (48) montée libre en translation selon un axe (A) sensiblement vertical, **caractérisée en ce qu**'elle comprend un dispositif de mesure (54) de l'immersion du tuyau (16) suivant sans contact les mouvements de la tige (46) et du flotteur (44) à l'intérieur de l'enceinte (22).

## Description

La présente invention est relative à une jauge pour contrôler la charge d'un tuyau d'une drague.

Ainsi, un tuyau de refoulement d'une drague suceuse en exploitation sur l'eau est utilisé pour acheminer des granulats, de la boue, du sable, ... , aspirés vers un bassin de stockage ou de décantation situé sur la berge ou à proximité.

Afin de s'assurer du bon déroulement du draguage, il est nécessaire de contrôler la charge des tuyaux de refoulement d'une drague suceuse en exploitation.

Dans un premier dispositif de contrôle de l'art antérieur, le contrôle de charge est effectué par des appareils de mesure, tels des manomètres ou des débitmètres, en prise sur les tuyaux de refoulement et d'aspiration.

Ce premier dispositif n'est pas fiable car les risques d'obstruction du tuyau d'aspiration sous l'eau et des conduits reliant lesdits tuyaux aux appareils de mesure sont susceptibles de mettre lesdits appareils en défaut.

Dans un deuxième dispositif de contrôle de l'art antérieur, les inconvénients précités sont évités grâce à l'utilisation d'un gammadensimètre, appareil permettant de mesurer la densité de l'eau et des matériaux transportés à l'intérieur des tuyaux et indépendamment des risques d'obstruction.

Cependant, un gammadensimètre est un appareil coûteux, d'utilisation risquée en raison de la source radioactive qui est scellée au sein de l'appareil, et peu adapté aux conditions des opérations de draguage sans une protection conséquente. Une jauge de charge développée antérieurement par le présent demandeur remédie aux inconvénients de ces deux premiers dispositifs de contrôle. Cette jauge de charge fait l'objet du brevet français publié sous la référence : FR-2.786.867.

Comme illustré sur la figure 3 de ce brevet FR-2.786.867, cette jauge de l'art antérieur est destinée au contrôle de charge d'un tuyau de refoulement sensiblement maintenu à la surface de l'eau par des éléments flottants.

Ladite jauge se présente sous la forme d'un tube fixé au tuyau de refoulement, sensiblement immergé et disposé perpendiculairement à la surface de l'eau, fermé par un bouchon plein en partie supérieure et par un bouchon ajouré en partie inférieure afin de permettre la pénétration de l'eau dans le tube.

A l'intérieur du tube, ladite jauge comprend un châssis et deux supports guidant une tige en translation dans l'axe longitudinal du tube, un flotteur fixé à l'extrémité inférieure de ladite tige, et un câble reliant les extrémités inférieures et supérieures de la tige et étant enroulé autour d'une poulie équipée d'un capteur électronique angulaire.

Ainsi, le fonctionnement de cette jauge de charge est une application du principe d'Archimède : l'augmentation ou la diminution de la densité de la charge du tuyau de refoulement par rapport à la densité de l'eau entraîne une augmentation ou diminution de l'immersion des éléments flottants et du tuyau, ce qui déplace la tige par l'intermédiaire du flotteur et donc entraîne la poulie en rotation.

Par la suite, le capteur angulaire étant relié à un afficheur électronique en cabine de la drague, les informations acquises par ledit capteur angulaire sur l'immersion des éléments flottants et relatives à la charge du tuyau de refoulement sont indiquées à l'opérateur par l'afficheur.

Bien que plus fiable que le contrôle effectué avec les appareils de mesure de type manomètre ou débitmètre, et d'une utilisation plus adaptée et moins risquée que les dispositifs de contrôle à gammamètre, cette jauge de l'art antérieur présente certains inconvénients.

Ainsi, au bout d'un certain temps d'utilisation, ladite jauge nécessite un nettoyage du câble, de la poulie et du capteur angulaire, la boue ou le sable étant susceptible de venir bloquer l'entraînement de la poulie par ledit câble ou de gêner la détection du capteur angulaire, ce qui fausse le contrôle de charge.

De plus, ladite jauge n'est pas autonome et nécessite une installation avec une liaison filaire jusqu'à la cabine de la drague, autant pour son alimentation que pour communiquer les informations sur l'immersion à l'afficheur.

La présente invention a pour objectif de pallier les inconvénients des dispositifs de contrôle de charge ou des jauges de charge de l'art antérieur en proposant une jauge de charge facile à installer sur une drague existante, telle une drague suceuse à refoulement flottant, nécessitant moins d'entretien en raison d'une meilleure protection des moyens de détection

A cet effet, l'invention a pour objet une jauge de contrôle de la charge d'un tuyau flottant, notamment relié à une drague, ladite jauge étant rapportée directement ou indirectement sur ledit tuyau et comprenant une enceinte avec une paroi inférieure ajourée, et, à l'intérieur de l'enceinte, un flotteur se maintenant à la surface de l'eau et fixé à l'extrémité inférieure d'une tige montée libre en translation selon un axe sensiblement vertical, ladite jauge étant **caractérisée en ce qu**'elle comprend un dispositif de mesure de l'immersion du tuyau suivant sans contact les mouvements de la tige et du flotteur à l'intérieur de l'enceinte.

D'autres caractéristiques et avantages ressortiront de la description qui va suivre de l'invention, description donnée à titre d'exemple uniquement, en regard des dessins annexés sur lesquels :
- la figure 1 illustre schématiquement une drague suceuse et un tuyau de refoulement flottant et équipé d'une jauge de contrôle de charge selon l'invention,
- la figure 2 illustre schématiquement une coupe selon un plan médian d'un premier mode de réalisation d'une jauge de contrôle de charge selon l'invention,
- la figure 3 illustre schématiquement une coupe selon un plan médian d'un deuxième mode de réalisation préféré d'une jauge de contrôle de charge selon l'invention.

La présente invention est relative à une jauge de contrôle de la charge transportée par un tuyau flottant d'une drague.

Par charge, l'invention entend un mélange d'eau et de différents matériaux tels des granulats, du sable, de la boue ou tout autre sédiment aspiré lors des opérations de dragage, ou curage, d'une étendue d'eau ou d'un cours d'eau.

La jauge selon l' invention est plus particulièrement adaptée au contrôle de la charge issue d'une drague suceuse reliée à un bassin de stockage, ou de décantation, par un ou plusieurs tuyaux de refoulement flottants.

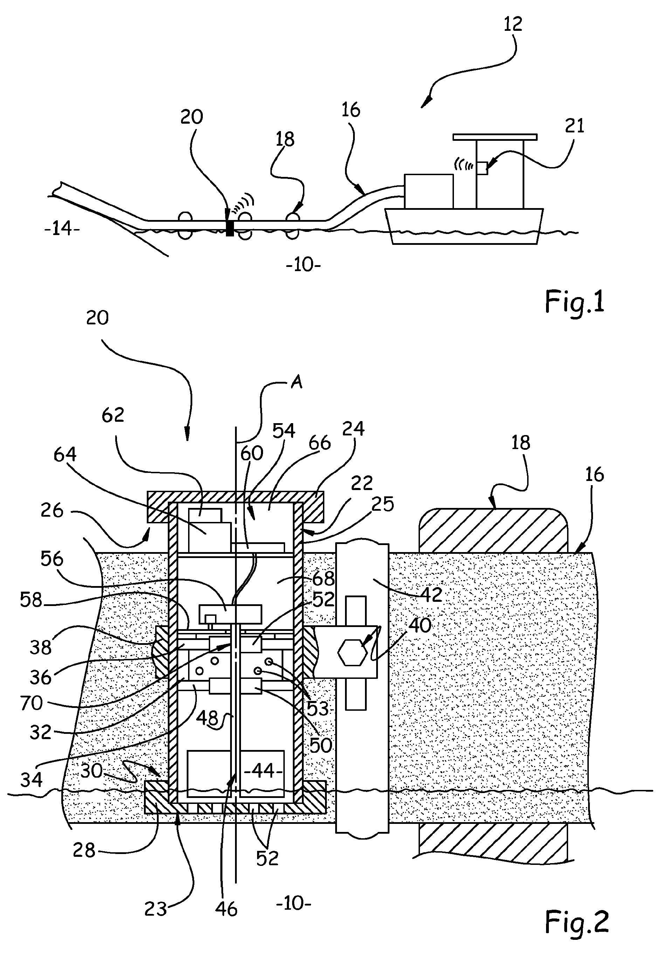

Comme illustré sur la figure 1, le dragage est réalisé sur l'eau 10 par une drague suceuse 12 reliée à la berge 14 par au moins un tuyau de refoulement 16 flottant se prolongeant jusqu'audit bassin de stockage.

Afin d'être maintenu sensiblement à la surface de l'eau, ledit tuyau de refoulement 16 est supporté par au moins un élément flottant 18.

Afin d'assurer le contrôle de la charge transportée par le tuyau de refoulement 16 flottant, la présente jauge a pour fonction de mesurer l'immersion dudit tuyau, cette immersion obéissant au principe d'Archimède et variant en fonction de la différence de densité entre l'eau et la charge transportée par le tuyau.

A cet effet, au moins une jauge de contrôle 20 de charge est rapportée sur ledit tuyau 16, ladite jauge 20 communiquant à distance avec une base 21 se trouvant notamment en cabine et comprenant au moins un afficheur pour informer l'opérateur chargé de surveiller le déroulement du dragage.

Comme illustré en figure 2, ladite jauge 20 selon l'invention comprend une enceinte 22 avec une paroi inférieure ajourée 23.

Dans un mode de réalisation préféré, l'enceinte 22 prend la forme d'un tube 25 fermé par un couvercle supérieur 24 au niveau de la partie supérieure 26 de ladite jauge, et la paroi inférieure ajourée 23 prend la forme d'un couvercle inférieur 28 venant obturer partiellement ledit tube 25 en partie inférieure 30 de la jauge.

Ensuite, la jauge 20 comprend un châssis 32 et au moins deux supports (34,36) solidarisés à l'intérieur de l'enceinte 22, lesdits supports (34,36) étant espacés l'un par rapport à l'autre dans la longueur dudit tube 25.

Les couvercles supérieur 24 et inférieur 28 ainsi que le châssis 32 et/ou les supports (34,36) sont solidarisés au tube 25 par tout moyen connu, tel qu'un assemblage par vissage, et de préférence autorisant un démontage desdits éléments et assurant une liaison étanche, cette dernière caractéristique n'étant évidemment pas nécessaire pour le montage du couvercle inférieur 28 ajouré.

De préférence, le tuyau 16 étant maintenu sensiblement horizontalement à la surface de l'eau par au moins un élément flottant 18, la jauge 20 est rapportée sensiblement perpendiculairement à la surface de l'eau par l'intermédiaire de moyens de fixation au tuyau 16 directement ou à l'élément flottant 18 indirectement. En variante, la jauge peut être intégrée dans l'élément flottant 18.

Ces moyens de fixation peuvent consister, par exemple, en un premier collier 38 enserrant l'enceinte 22 de ladite jauge et relié par une liaison 40 à un deuxième collier 42 enserrant le tuyau 16.

A l'intérieur de l'enceinte 22, la jauge 20 comprend un flotteur 44 fixé à l'extrémité inférieure 46 d'une tige 48 notamment métallique, ladite tige 48 étant montée libre en translation selon un axe A sensiblement vertical, correspondant à l'axe longitudinal du tube 25, par l'intermédiaire de deux paliers (50,52) portés par les supports (34,36) et le châssis 32.

De préférence, la liaison 40 est réglable de façon à pouvoir ajuster la position de la jauge 20 relativement au tuyau 16.

Ainsi, en effectuant un réglage adapté de la position de la jauge 20 relativement au tuyau 16 de façon que la partie inférieure 30 de la dite jauge 20 soit sensiblement immergée lorsque le tuyau 16 est sensiblement immergé, l'eau pénètre à l'intérieur de ladite jauge 20 par des ouvertures 52 prévues dans le couvercle 28 ajouré au niveau de la partie inférieure 30 de ladite jauge, le flotteur 44 se maintient à la surface de l'eau et permet ainsi de suivre les variations de la profondeur d'immersion, et donc de charge, du tuyau 16.

En raison des variations de la hauteur d'eau à l'intérieur de l'enceinte 22, des trous d'aération 53 sont prévus à une hauteur intermédiaire dans ladite enceinte 22, sensiblement à mi-longueur dudit tube 25.

Afin de suivre les variations d'immersion, et donc de charge, du tuyau 16 de refoulement, la jauge 20 comprend un dispositif de mesure 54. Avantageusement, les paliers (50,52) fournissent une liaison sensiblement étanche avec la tige 48 de manière à éviter que des particules de sable ou de boue remontent vers ledit dispositif de mesure 54 et viennent perturber son fonctionnement.

Ledit dispositif de mesure 54 comprend au moins un émetteur/récepteur 56 de faisceau, un réflecteur 58 apte à réfléchir ledit faisceau vers l'émetteur/récepteur 56, des moyens de traitement 60, des moyens de communication sans fil 62 et un accumulateur d'énergie électrique 64.

De préférence, les moyens de traitement 60, les moyens de communication sans fil 62 et l'accumulateur d'énergie électrique 64 sont logés dans un compartiment 66 en partie supérieure 26 de la jauge, immédiatement au-dessous du couvercle supérieur 24.

Avantageusement, ledit émetteur/récepteur 56 est relié au compartiment 66 de manière à transmettre ses mesures au moyen de traitement 60 et à pouvoir être alimenté par l'accumulateur 64.

Ledit compartiment 66 consiste en un étage isolé du reste du volume intérieur 68 de l'enceinte 22 de ladite jauge, la tige 48 et le flotteur 44 se translatant dans ledit volume intérieur 68.

Dans un premier mode de réalisation de la jauge 20 selon l'invention, représenté sur la figure 2, l'émetteur/récepteur 56 de faisceau est mobile et fixé à l'extrémité supérieure 70 de la tige 48, et le réflecteur 58 est fixe et solidarisé à l'enceinte 22, notamment rapporté sur le support 36, le châssis 32 ou directement sur le tube 25.

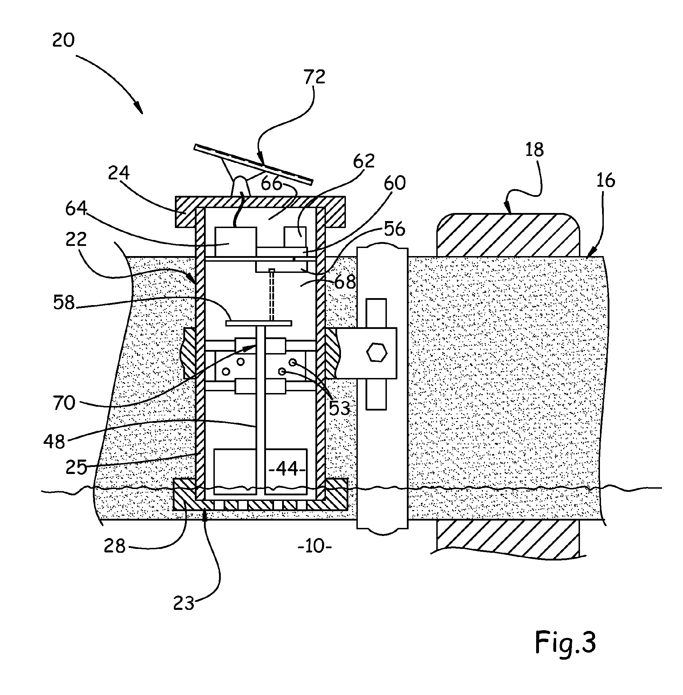

Par conséquent, l'émetteur/récepteur 56 conserve une position de référence sensiblement stable grâce au flotteur 44 se maintenant à la surface de l'eau, et le réflecteur 58 suit les variations de la profondeur d'immersion du tuyau 16. Dans un deuxième mode de réalisation préféré de la jauge 20 selon l'invention, représenté sur la figure 3, l'émetteur/récepteur 56 de faisceau est fixe et solidarisé à l'enceinte 22, notamment rapporté en dessous du compartiment 66 ou directement sur le tube 25, et le réflecteur 58 est mobile et fixé à l'extrémité supérieure 70 de la tige 48.

Par conséquent, le réflecteur 58 conserve une position de référence sensiblement stable grâce au flotteur 44 se maintenant à la surface de l'eau, et l'émetteur/récepteur 56 suit les variations de la profondeur d'immersion du tuyau 16.

Ce deuxième mode de réalisation étant préféré car il évite de soumettre l'émetteur/récepteur 56 à de faibles oscillations dues à de petites vagues lorsque la surface de l'eau est agitée, ces faibles oscillations étant susceptibles de perturber le faisceau émis ainsi que la réception du faisceau réfléchi.

Dans le premier comme dans le deuxième mode de réalisation de l'invention, par émission d'un faisceau, réflexion dudit faisceau, réception et mesure de certaines caractéristiques du faisceau réfléchi, l'émetteur/récepteur 56 et le réflecteur 58 permettent de suivre instantanément les variations de la profondeur d'immersion, et donc de la charge, du tuyau 16.

Avantageusement, les moyens de traitement 60 peuvent être programmés pour filtrer, ou lisser, les mesures transmises par l'émetteur/récepteur 56 afin que les moyens de communication sans fil 62, notamment par radiofréquence, retransmettent un signal exploitable à la base 21, l'évolution temporelle des variations de profondeur d'immersion devant être perçues aisément par l'opérateur sur l'afficheur.

Selon des variantes de réalisation, l'émetteur/récepteur 56 peut prendre la forme d'un élément unique, ou être constitué de deux éléments séparés, l'un assurant l'émission et l'autre assurant la réception du signal. L'émetteur/récepteur 56 génère un faisceau d'ondes électromagnétiques, ou éventuellement acoustiques.

De préférence, le faisceau appartient aux infrarouges ou à la lumière visible, éventuellement issu d'un laser, et le réflecteur est constitué d'au moins un miroir.

L'accumulateur 64 et les moyens de communication sans fil 62 situés dans le compartiment 66 autorisent un fonctionnement autonome et un montage aisé de la jauge sur un tuyau d'une drague, c'est-à-dire sans installation filaire la reliant à la cabine.

Ainsi, la présente jauge peut être facilement et rapidement mise en oeuvre en remplacement d'un dispositif de contrôle de charge de l'art antérieur équipant un tuyau d'une drague existante.

Selon une amélioration possible de l'invention et illustrée en figure 3, la jauge 20 peut fonctionner de manière totalement autonome en étant équipée d'un panneau photovoltaïque 72 relié à l'accumulateur 64 et fixé en partie supérieure 26 de la jauge. Ledit panneau 72 capte l'énergie solaire pour la transformer en énergie électrique qui est ensuite employée, si besoin, pour recharger l'accumulateur 64. Enfin, dans le cas d'une drague suceuse reliée au bassin de stockage par plusieurs tuyaux 16 de refoulement, une jauge de contrôle 20 de charge peut venir équiper chaque tuyau. Dans cette configuration, les moyens de communication sans fil de la base 21 et des différentes jauges 20 sont adaptés afin que la base 21 identifie les différentes jauges en cours d'utilisation et affiche les variations correspondant à une jauge donnée.

De préférence, le tube 25, les couvercles supérieur 24 et inférieur 28 sont en PVC ou tout autre polymère. Les autres composants de la jauge 20, dont notamment le châssis 32, les supports (34,36), les paliers (50,52), la tige métallique 48, et les colliers (38,42), sont réalisés dans des matériaux résistants à la corrosion, ou traités contre la corrosion.

On constate que le dispositif de mesure 54 de l'immersion du tuyau, protégé du sable et de la boue par les paliers (50,52), suivant sans liaison mécanique, et donc sans contact, les mouvements de la tige 46 et du flotteur 44 à l'intérieur de l'enceinte 22, permet de maintenir la fiabilité des mesures plus longtemps qu'une jauge de contrôle de l'art antérieur à dispositif de suivi mécanique.

Plus généralement, et en cumulant cette protection et cette fiabilisation du dispositif de mesure 54 avec la possibilité d'un fonctionnement autonome, la jauge de contrôle 20 selon l'invention nécessite beaucoup moins d'entretien et de maintenance que les dispositifs de l'art antérieur.

Bien entendu, l'invention couvre également toute application de la présente jauge au contrôle de la charge, ou de l'immersion, d'un tuyau flottant utilisé pour les besoins d'opérations de nettoyage ou de curage d'une étendue ou d'un cours d'eau et similaires à des opérations de dragage.

## Revendications

1. Jauge (20) de contrôle de la charge d'un tuyau (16) flottant, notamment relié à une drague, ladite jauge (20) étant rapportée directement ou indirectement sur ledit tuyau (16) et comprenant une enceinte (22) avec une paroi inférieure ajourée (23), et, à l'intérieur de ladite enceinte (22), un flotteur (44) se maintenant à la surface de l'eau (10) et fixé à l'extrémité inférieure (46) d'une tige (48) montée libre en translation selon un axe (A) sensiblement vertical, **caractérisée en ce qu'**elle comprend un dispositif de mesure (54) de l'immersion du tuyau (16) suivant sans contact les mouvements de la tige (46) et du flotteur (44) à l'intérieur de l'enceinte (22).

2. Jauge (20) de contrôle de la charge d'un tuyau (16) flottant, notamment relié à une drague, selon la revendication 1, **caractérisée en ce que** le dispositif de mesure (54) comprend au moins un émetteur/récepteur (56) de faisceau et un réflecteur (58) apte à réfléchir ledit faisceau vers l'émetteur/récepteur (56).

3. Jauge (20) de contrôle de la charge d'un tuyau (16) flottant, notamment relié à une drague, selon la revendication 2, **caractérisée en ce que** l'émetteur/récepteur (56) génère un faisceau d'ondes électromagnétiques appartenant aux infrarouges ou à la lumière visible.

4. Jauge (20) de contrôle de la charge d'un tuyau (16) flottant, notamment relié à une drague, selon la revendication 3, **caractérisée en ce que** le faisceau est issu d'un laser.

5. Jauge (20) de contrôle de la charge d'un tuyau (16) flottant, notamment relié à une drague, selon l'une des revendications 2 à 4, **caractérisée en ce que** l'émetteur/récepteur (56) est mobile et fixé à l'extrémité supérieure (70) de la tige (48), et **en ce que** le réflecteur (58) est fixe et solidarisé à l'enceinte (22).

6. Jauge (20) de contrôle de la charge d'un tuyau (16) flottant, notamment relié à une drague, selon l'une des revendications 2 à 4, **caractérisé en ce que** l'émetteur/récepteur (56) est fixe et solidarisé à l'enceinte (22), et **en ce que** le réflecteur (58) est mobile et fixé à l'extrémité supérieure (70) de la tige (48).

7. Jauge (20) de contrôle de la charge d'un tuyau (16) flottant, notamment relié à une drague, selon l'une des revendications 1 à 6, **caractérisé en ce que** le dispositif de mesure (54) comprend des moyens de traitement (60) et un accumulateur d'énergie électrique (64) logés dans un compartiment (66) isolé en partie supérieure (26) de la jauge et au-dessous du couvercle supérieur (24).

8. Jauge (20) de contrôle de la charge d'un tuyau (16) flottant, notamment relié à une drague, selon la revendication 7, **caractérisé en ce que** la jauge (20) est équipée d'un panneau photovoltaïque (72) fixé en partie supérieure (26) de ladite jauge et relié à l'accumulateur (64).

9. Jauge (20) de contrôle de la charge d'un tuyau (16) flottant, notamment relié à une drague, selon l'une des revendications 2 à 8, **caractérisé en ce que** le dispositif de mesure (54) comprend des moyens de communication sans fil (62) pour retransmettre les mesures transmises par l'émetteur/récepteur (56).

10. Drague (12) équipée d'une base (21) et reliée à au moins un tuyau (16) sur lequel est rapporté une jauge (20) de contrôle selon la revendication 9, les moyens de communication sans fil (62) retransmettant les mesures transmises par l'émetteur/récepteur (56) à ladite base (21).
